# EUROPEAN PATENT APPLICATION

(11) **EP 4 755 706 A1**
(43) Date of publication of application: **10.06.2026**
(21) Application number: 23947474.5
(22) Date of filing: 28.07.2023
(51) Int. Cl.: B60L 58/15, B60L 53/10

(54) **TRANSPORT SYSTEM AND CHARGING MANAGEMENT DEVICE**

(71) Applicant: Fuji Corporation, Chiryu-shi, Aichi 472-8686 (JP)
(72) Inventor: KUSAKABE, Yuika, Chiryu-shi, Aichi 472-8686 (JP); ODA, Takuya, Chiryu-shi, Aichi 472-8686 (JP)
(74) Representative: Grünecker Patent- und Rechtsanwälte PartG mbB
(86) International application number: PCT/JP2023/027700
(87) International publication number: WO 2025/027674

(57) **Abstract**

A transport system including an automated guided vehicle configured to transport a target object using power of a battery includes a charging completion determination section configured to, when an operation of the automated guided vehicle is stopped and the battery is being charged during a predetermined operation time, set a completion threshold to be smaller as a remaining time until an end of the operation time becomes shorter, and determine completion of charging of the battery based on a remaining capacity of the battery and the completion threshold.

## Description

### Technical Field

The present description discloses a transport system and a charging management device.

### Background Art

Conventionally, there have been proposals for managing charging of an autonomous moving body such as an automated guided vehicle or a robot. For example, Patent Literature 1 discloses that the amount of charge necessary for an autonomous moving body to perform work is secured by determining a start time and an end time of the work of the autonomous moving body and a start time and an end time of movement of the autonomous moving body such that the amount of charge for the autonomous moving body at an installation location of a charger becomes equal to or greater than a required amount.

### Citation List

### Patent Literature

Patent Literature 1: WO 2018/211650

### Summary of the Invention

### Technical Problem

Here, when a start time and an end time of an operation (work) of the autonomous moving body are determined in advance, it is conceivable to uniformly determine a start time and an end time of charging based on the amount of charge. However, in such a case, even if the amount of charge is sufficient for operation until the end time of the operation, the operation cannot be resumed because the predetermined end time has not yet been reached, which may result in a decrease in operation rate.

A main object of the present disclosure is to improve an operation rate by increasing a time during which an automated guided vehicle transports a target object.

### Solution to Problem

The present disclosure provides the following means to achieve the above-described object.

A transport system of the present disclosure is
a transport system including
an automated guided vehicle configured to transport a target object using power of a battery, and
a charging completion determination section configured to, when an operation of the automated guided vehicle is stopped and the battery is being charged during a predetermined operation time, set a completion threshold to be smaller as a remaining time until an end of the operation time becomes shorter, and determine completion of charging of the battery based on a remaining capacity of the battery and the completion threshold.

In the transport system of the present disclosure, when the battery is being charged, the completion threshold is set to be smaller as the remaining time until the end of the operation time becomes shorter, and the completion of charging of the battery is determined based on the remaining capacity of the battery and the completion threshold. Therefore, even if the remaining capacity of the battery is the same, depending on the remaining time, it is possible to end charging and resume the operation of the automated guided vehicle. Therefore, it is possible to improve an operation rate by increasing a time during which the automated guided vehicle transports the target object.

### Brief Description of Drawings

Fig. 1 is a schematic configuration diagram of transport system 1.
Fig. 2 is an external perspective view of automated guided vehicle 10 and roll cage cart 100.
Fig. 3 is an external perspective view of automated guided vehicle 10.
Fig. 4 is a side view of automated guided vehicle 10.
Fig. 5 is a side view of automated guided vehicle 10.
Fig. 6 is a view illustrating a state in which automated guided vehicle 10 has slipped under roll cage cart 100.
Fig. 7 is a view illustrating a state in which automated guided vehicle 10 is coupled to roll cage cart 100.
Fig. 8 is a block diagram of transport system 1.
Fig. 9 is a flowchart illustrating an example of charging management processing.
Fig. 10 is a flowchart illustrating an example of charging start determination processing.
Fig. 11 is a flowchart illustrating an example of charging completion determination processing.
Fig. 12 is a view illustrating an example of a relationship between first completion threshold E1 and second completion threshold E2.
Fig. 13 is a flowchart illustrating an example of end-of-operation processing.
Fig. 14 is a view illustrating an example of battery consumption rate P associated with operation information.
Fig. 15 is a flowchart illustrating charging start determination processing of a modification.
Fig. 16 is a flowchart illustrating charging start determination processing of a modification.

### Description of Embodiments

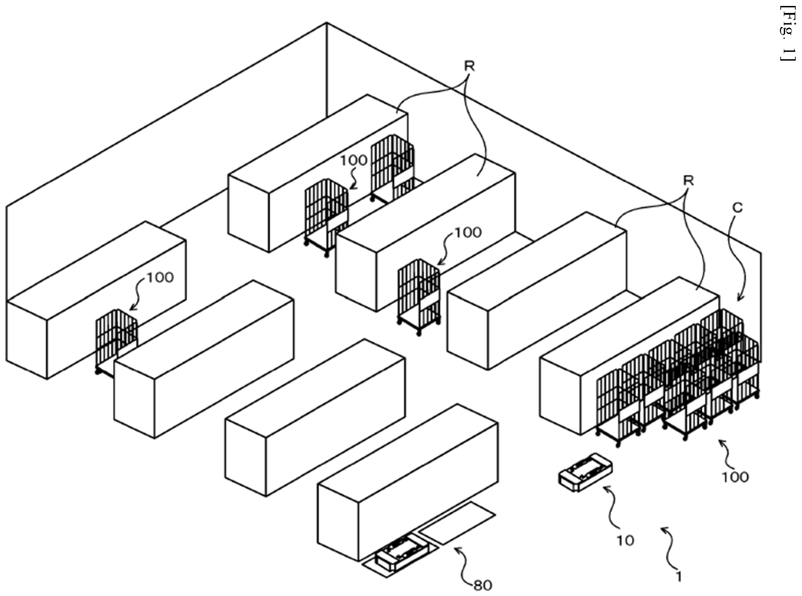

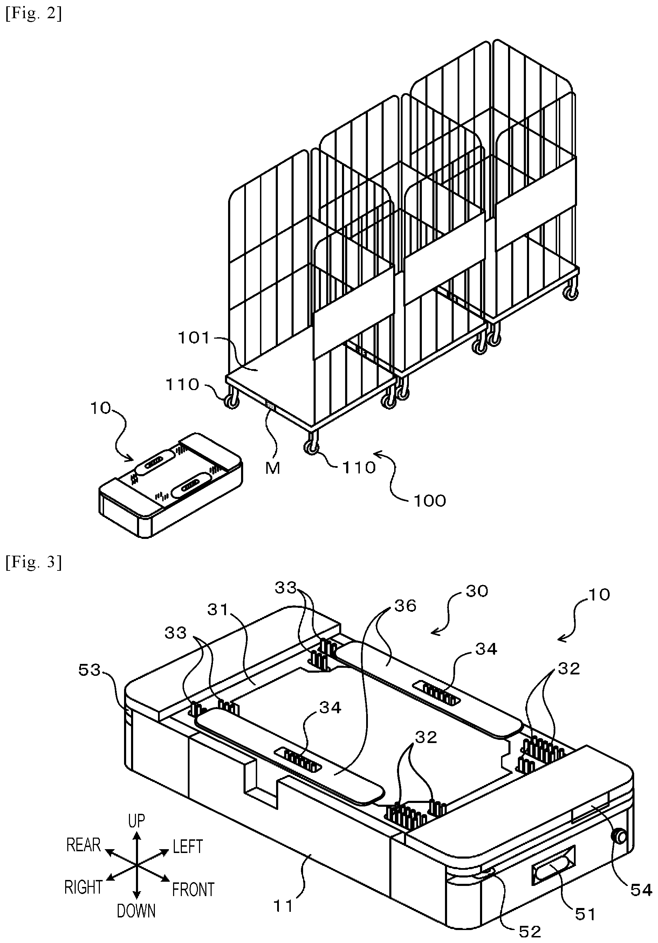

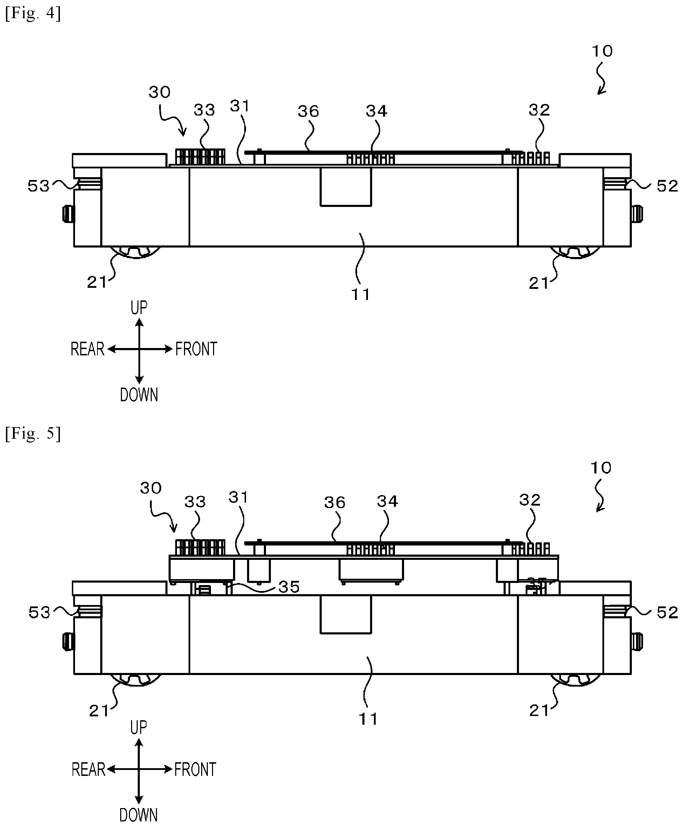

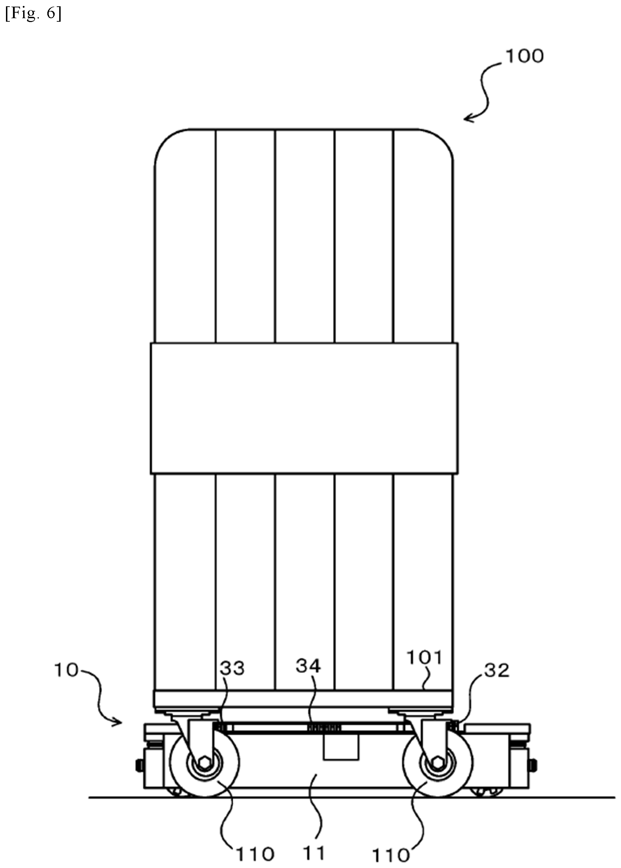

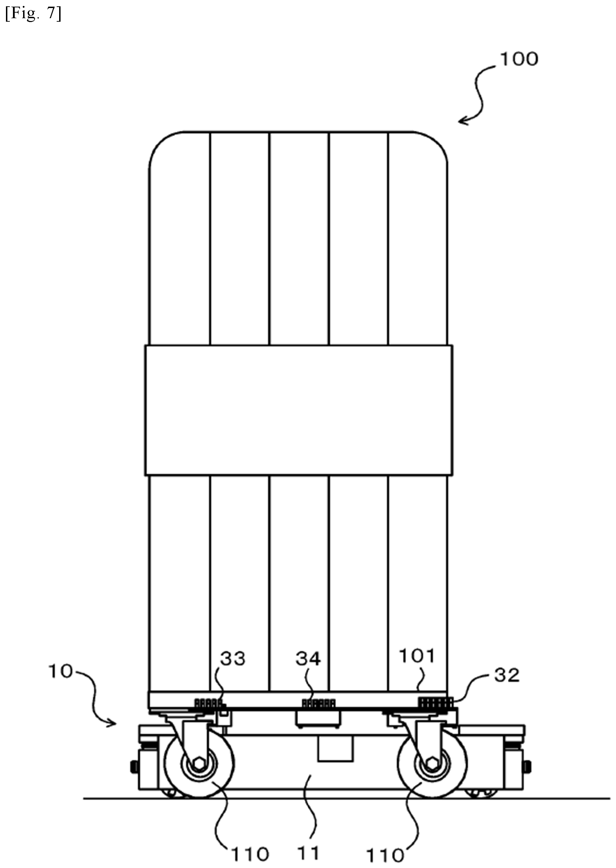

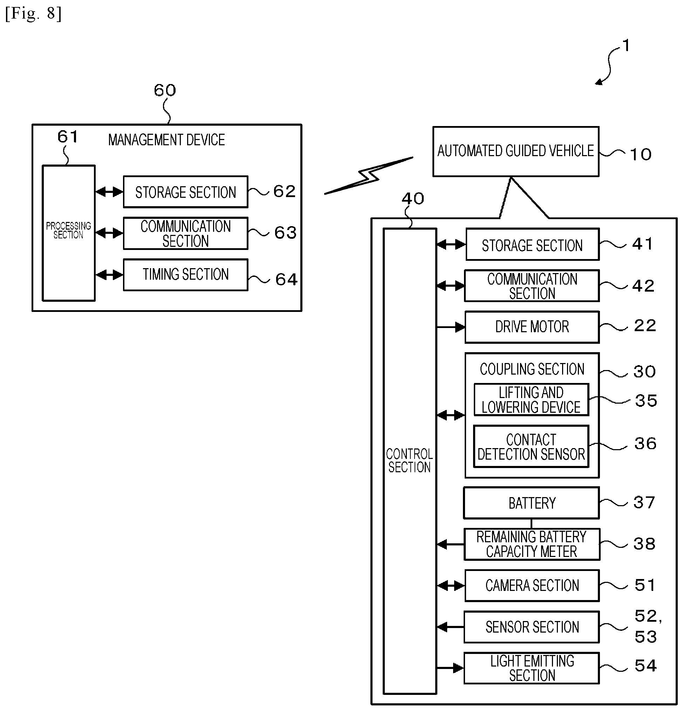

An embodiment of the present disclosure will be described with reference to the drawings. Fig. 1 is a schematic configuration diagram of transport system 1. Fig. 2 is an external perspective view of automated guided vehicle 10 and roll cage cart 100. Fig. 3 is an external perspective view of automated guided vehicle 10. Figs. 4 and 5 are side views of automated guided vehicle 10. Fig. 6 is a view illustrating a state in which automated guided vehicle 10 has slipped under roll cage cart 100. Fig. 7 is a view illustrating a state in which automated guided vehicle 10 is coupled to roll cage cart 100. Fig. 8 is a block diagram of transport system 1.

As illustrated in Fig. 1, transport system 1 of the present embodiment is used in a distribution center, a warehouse, a store, or the like having multiple shelves R, and includes one or more (two are illustrated in Fig. 1) automated guided vehicles 10 and management device 60 (see Fig. 8) that manages an operation of automated guided vehicles 10. Automated guided vehicle 10 is an autonomous mobile robot (AMR) that is coupled to roll cage cart 100 and that transports roll cage cart 100 to designated shelf R. Automated guided vehicle 10 is charged in charging area 80.

As illustrated in Fig. 2, for example, roll cage cart 100 has rectangular and mesh-shaped loading platform portion 101 on which cargo can be loaded, and multiple (for example, four) casters 110 that are rotatably attached to a lower surface of loading platform portion 101. Loading platform portion 101 of roll cage cart 100 is provided with marker M such as an AR marker, a two-dimensional code, or a barcode for identifying roll cage cart 100. By reading marker M, automated guided vehicle 10 recognizes roll cage cart 100 (transport target cart) to be transported and the type of the cargo loaded on loading platform portion 101. Marker M may be attached to the cargo loaded on loading platform portion 101.

As illustrated in Fig. 3, automated guided vehicle 10 of the present embodiment has a flat rectangular parallelepiped appearance with a low height. Automated guided vehicle 10 includes vehicle body portion 11, multiple (for example, four) wheels 21 rotatably attached to a bottom surface of vehicle body portion 11, and multiple (for example, four) drive motors 22 (see Fig. 8) that rotationally drive corresponding wheels 21. In the present embodiment, multiple wheels 21 are configured as mecanum wheels having multiple rollers on the outer periphery of the wheel that can rotate around an axis inclined by 45 degrees with respect to a rotation axis of the wheel. Automated guided vehicle 10 can move vehicle body portion 11 in all directions or make vehicle body portion 11 turn (such as a spin turn, a pivot turn, or a gentle turn) by independently controlling the rotation direction and the rotation speed of corresponding wheels 21 using multiple drive motors 22. Multiple wheels 21 may also be configured as omni wheels having multiple rollers that can rotate around an axis that intersects three-dimensionally with respect to the rotation axis of the wheel. That is, multiple wheels 21 may be any type of wheels that allow vehicle body portion 11 to move in multiple directions or turn.

In addition, as illustrated in Figs. 4 and 5, automated guided vehicle 10 includes coupling section 30 that is provided on an upper surface of vehicle body portion 11 and that can be coupled to roll cage cart 100 in a state where vehicle body portion 11 has slipped under roll cage cart 100. Coupling section 30 includes flat plate-shaped lifting and lowering plate 31, coupling pins 32, 33, and 34 that extend upward with respect to lifting and lowering plate 31, and lifting and lowering device 35 that lifts and lowers lifting and lowering plate 31. Lifting and lowering plate 31 has a left-to-right width substantially equal to a left-to-right width of vehicle body portion 11 and a front-to-rear width slightly shorter than a front-to-rear width of vehicle body portion 11 so as to cover the upper surface of vehicle body portion 11. Coupling pin 32 is provided at a front portion of lifting and lowering plate 31, coupling pin 33 is provided at a rear portion of lifting and lowering plate 31, and coupling pin 34 is provided at an intermediate portion between the front portion and the rear portion of lifting and lowering plate 31. As illustrated in Figs. 6 and 7, coupling section 30 lifts lifting and lowering plate 31 by lifting and lowering device 35 in a state where vehicle body portion 11 has slipped under roll cage cart 100, thereby engaging at least one of coupling pins 32, 33, and 34 with an underside of loading platform portion 101 of roll cage cart 100. Accordingly, automated guided vehicle 10 and roll cage cart 100 are coupled to each other, and automated guided vehicle 10 can transport roll cage cart 100.

As illustrated in Figs. 3 to 5, contact detection sensors 36 (spring sensors) for detecting that coupling section 30 (coupling pins 32, 33, and 34) is in contact with (coupled to) loading platform portion 101 of roll cage cart 100 are provided on both left and right sides of lifting and lowering plate 31. Contact detection sensor 36 has a plate that is biased upward by a spring with its upper end at approximately the same height as coupling pins 32, 33, and 34 relative to lifting and lowering plate 31. When coupling pins 32, 33, and 34 are engaged with loading platform portion 101 of roll cage cart 100, the plate of contact detection sensor 36 comes into contact with loading platform portion 101, and is lowered relative to coupling pins 32, 33, and 34 while the spring is compressed. Contact detection sensor 36 detects that the plate has been lowered relatively, thereby detecting that coupling section 30 has come into contact with (coupled to) loading platform portion 101 of roll cage cart 100.

Furthermore, as illustrated in Fig. 8, automated guided vehicle 10 includes control section 40 that performs overall control, storage section 41 that stores various information, communication section 42 for performing communication (wireless communication) with management device 60 and the like, camera section 51 as an image capturing device, sensor sections 52 and 53, and light emitting section 54 that illuminates the area ahead of vehicle body portion 11. Camera section 51 is installed on a front surface of vehicle body portion 11 to recognize the area ahead of vehicle body portion 11. Sensor sections 52 and 53 are installed on the front surface and a rear surface of vehicle body portion 11, respectively, to detect surrounding interfering objects. Sensor sections 52 and 53 detect surrounding objects and a distance to the objects. In the present embodiment, as sensor sections 52 and 53, a light detection and ranging (LiDAR) sensor is used that scans the surrounding area with laser light, receives each reflected light, measures the time it takes to receive the reflected light, thereby measuring distance data for each scanning angle and obtaining surrounding point cloud data. Light emitting section 54 is installed on the front surface of vehicle body portion 11, and illuminates the area ahead of vehicle body portion 11 to make it easier for camera section 51 to recognize surrounding objects in dark environments.

Automated guided vehicle 10 also includes battery 37 that supplies power to each section such as each drive motor 22, lifting and lowering device 35, control section 40, storage section 41, communication section 42, camera section 51, sensor sections 52 and 53, and light emitting section 54, and remaining battery capacity meter 38 that measures the remaining capacity of battery 37 (remaining battery capacity B). Battery 37 is a chargeable and dischargeable secondary battery, and is, for example, a lithium ion battery. Remaining battery capacity meter 38 includes a current sensor attached to an output terminal of battery 37, a voltage sensor attached between output terminals of battery 37, and the like, and calculates a ratio of the residual capacity to the maximum capacity of battery 37 as remaining battery capacity B based on a detection value of each sensor.

Control section 40 is configured as a microprocessor centered on CPU, and includes ROM for storing a processing program, RAM for temporarily storing data, a timing section, and the like in addition to the CPU. As illustrated in Fig. 8, control section 40 receives an image signal from camera section 51, detection signals from sensor sections 52 and 53, a detection signal from contact detection sensor 36, a detection signal from remaining battery capacity meter 38, and the like. Control section 40 outputs a control signal to drive motor 22, a control signal to lifting and lowering device 35, a control signal to light emitting section 54, and the like.

In charging area 80, one or more sections (two sections in Fig. 1) where automated guided vehicle 10 can stop are formed. Each section is provided with a charger for charging battery 37 of automated guided vehicle 10. In the present embodiment, the charger is a contact-type charging stand having a power supply electrode on its upper surface. When automated guided vehicle 10 moves into the section of charging area 80 and stands on the charging stand, the charger charges battery 37 by electrically connecting a power receiving electrode (not illustrated) provided on the bottom of automated guided vehicle 10 to the power supply electrode of the charging stand. Charging area 80 may be capable of charging battery 37 in a non-contact manner.

As illustrated in Fig. 8, management device 60 includes processing section 61, storage section 62, communication section 63 for performing communication (wireless communication) with automated guided vehicle 10, and timing section 64 that acquires a time. In addition, input devices such as a mouse and a keyboard, a display, and the like are connected to management device 60. Processing section 61 is configured as a microprocessor centered on CPU, and includes ROM for storing a processing program, RAM for temporarily storing data, and the like in addition to the CPU. Storage section 62 is a storage such as an HDD or an SSD, and stores various information.

Next, an operation of transport system 1 of the present embodiment configured in this manner will be described. In particular, charging management of battery 37 during an operation in which automated guided vehicle 10 automatically transports roll cage cart 100 will be described. For example, automated guided vehicle 10 automatically transports roll cage carts 100 one by one to the front of each target shelf R from roll cage cart storage area C in the store. This automatic transportation is carried out during a predetermined operation time between the end of the store's business hours and the start of the next business day (for example, eight hours from the operation start at 9:00 p.m. to the operation end at 5:00 a.m. the following day).

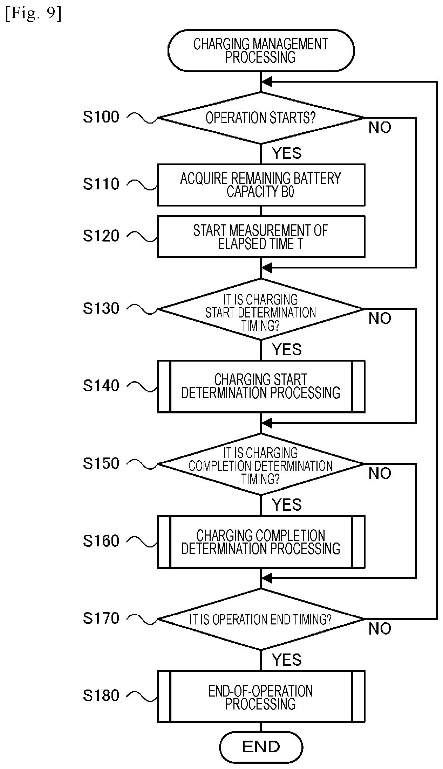

Fig. 9 is a flowchart illustrating an example of charging management processing. This processing is executed by processing section 61 of management device 60. In the charging management processing, processing section 61 first determines whether any automated guided vehicle 10 has started operation (S100). Processing section 61 determines that there is automated guided vehicle 10 that has started operation when, for example, a time at which a predetermined operation time starts (9:00 p.m. described above) has arrived, or when automated guided vehicle 10 has departed from charging area 80 as a result of being determined to have completed charging in processing described below. When it is determined that there is automated guided vehicle 10 that has started operation, processing section 61 acquires remaining battery capacity B of battery 37 of automated guided vehicle 10 as remaining battery capacity B0 at the start of operation (S110), starts measuring elapsed time T (actual operation time) of the operation of automated guided vehicle 10 (S120), and proceeds to S130. When it is determined that there is no automated guided vehicle 10 that has started operation, processing section 61 skips S110 and S120 and proceeds to S130.

Next, processing section 61 determines whether it is a charging start determination timing (S130). The charging start determination timing may be, for example, a timing at regular intervals after the start of a predetermined operation time, or may be a timing corresponding to a break in automatic transport work such as when roll cage cart 100 has reached its destination. When it is determined that it is the charging start determination timing, processing section 61 executes charging start determination processing (S140) and proceeds to S150, and, when it is determined that it is not the charging start determination timing, processing section 61 skips S140 and proceeds to S150.

Subsequently, processing section 61 determines whether it is a charging completion determination timing (S150). The charging completion determination timing is, for example, a timing at regular intervals when there is automated guided vehicle 10 being charged in charging area 80. When it is determined that it is the charging completion determination timing, processing section 61 executes charging completion determination processing (S160) and proceeds to S170, and, when it is determined that it is not the charging completion determination timing, processing section 61 skips S160 and proceeds to S170.

Then, processing section 61 determines whether it is an operation end timing (S170). The operation end timing is, for example, a timing at which a predetermined operation time ends (such as 5:00 a.m. described above). When it is determined that it is the operation end timing, processing section 61 executes end-of-operation processing (S180) and ends the charging management processing, and, when it is determined that it is not the operation end timing, processing section 61 returns to S100.

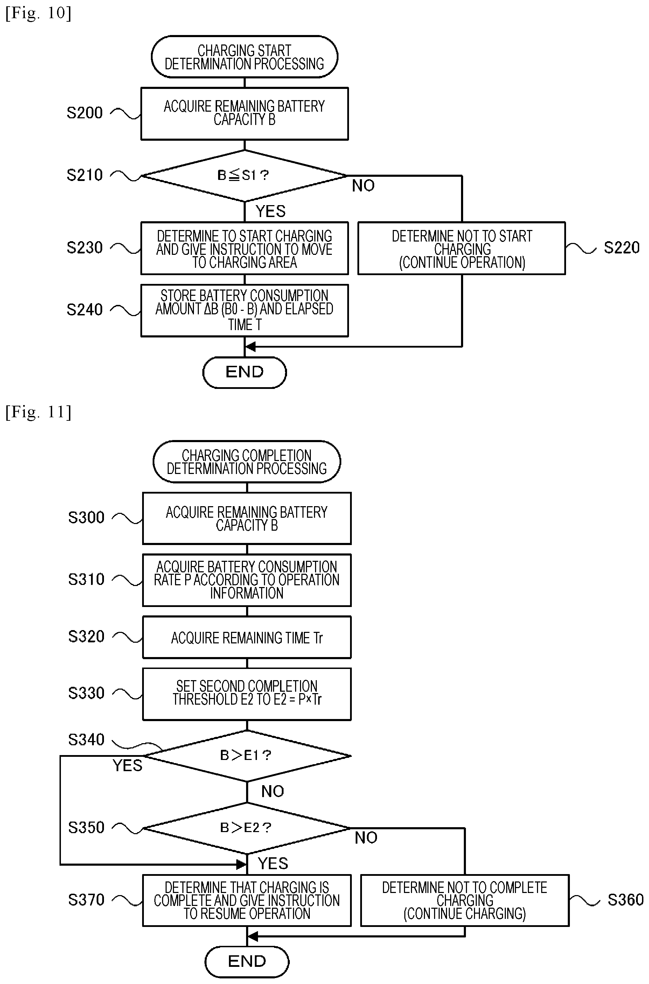

The charging start determination processing of S140 is performed based on a flowchart of Fig. 10. In the charging start determination processing, processing section 61 first acquires remaining battery capacity B of battery 37 of automated guided vehicle 10 in operation (S200), and determines whether remaining battery capacity B is equal to or less than first start threshold S1 for charging start determination (S210). First start threshold S1 is a constant value (fixed value) set to a predetermined remaining capacity such as 20% or 30%, and is also referred to as a fixed threshold for charging start determination. In the present embodiment, a fixed value is used as the threshold (first start threshold S1) for charging start determination, but a threshold that can be changed based on elapsed time T (remaining time Tr described below), an operation status of automated guided vehicle 10, and other conditions may be used. When it is determined that remaining battery capacity B is not equal to or less than first start threshold S1, processing section 61 determines not to start charging, that is, determines to continue the operation (S220), and ends the charging start determination processing.

On the other hand, when it is determined that remaining battery capacity B is equal to or less than first start threshold S1, processing section 61 determines to start charging and instructs automated guided vehicle 10 to move to charging area 80 (S230). When the charging start determination processing is executed at a timing other than the break in the automatic transport work, automated guided vehicle 10 may be instructed to move after the break in the automatic transport work has occurred. When automated guided vehicle 10 that has received the instruction of S230 moves to charging area 80 and stops, charging of battery 37 is started.

Next, processing section 61 stores battery consumption amount ΔB and elapsed time T of automated guided vehicle 10 that has been instructed to move (for which charging has started) in storage section 62 (S240), and ends the charging start determination processing. As battery consumption amount ΔB, a value obtained by subtracting current remaining battery capacity B acquired in S200 from remaining battery capacity B0 at the start of operation of automated guided vehicle 10 acquired in S110 is stored. In addition, elapsed time T is stored as the time from the start of measurement in S120 to the determination of the start of charging in S230. When there are multiple automated guided vehicles 10 in operation, processing section 61 performs the charging start determination processing for each automated guided vehicle 10.

The charging completion determination processing of S160 is performed based on a flowchart of Fig. 11. In the charging completion determination processing, processing section 61 first acquires remaining battery capacity B of battery 37 of automated guided vehicle 10 being charged (S300). Further, processing section 61 acquires battery consumption rate (power consumption rate) P (%/H) according to operation information (S310), and acquires remaining time Tr (H) (S320). As will be described below, processing section 61 calculates battery consumption rate P at the end of operation and stores battery consumption rate P in storage section 62 in association with the operation information. Therefore, processing section 61 acquires battery consumption rate P corresponding to the current (today's) operation information from storage section 62. In addition, processing section 61 acquires remaining time Tr until the end of the operation time, for example, until 5:00 a.m., based on the current time.

Next, processing section 61 sets second completion threshold E2 for charging completion determination by multiplying battery consumption rate P by remaining time Tr (S330). Subsequently, processing section 61 determines whether remaining battery capacity B exceeds first completion threshold E1 for charging completion determination (S340) and whether remaining battery capacity B exceeds second completion threshold E2 for charging completion determination (S350). First completion threshold E1 is a constant value (fixed value) set to a predetermined remaining capacity such as 70% or 80%, and is also referred to as a fixed threshold for charging completion determination. When it is determined that remaining battery capacity B does not exceed first completion threshold E1 and does not exceed second completion threshold E2, processing section 61 determines not to complete charging, that is, determines to continue the charging (S360), and ends the charging completion determination processing.

On the other hand, when it is determined that remaining battery capacity B exceeds first completion threshold E1 or it is determined that remaining battery capacity B does not exceed first completion threshold E1 but exceeds second completion threshold E2, processing section 61 determines that charging is complete, instructs automated guided vehicle 10 to resume the operation (S370), and ends the charging completion determination processing. When there are multiple automated guided vehicles 10 being charged, processing section 61 performs the charging completion determination processing for each automated guided vehicle 10. Automated guided vehicle 10 that has received the instruction of S370 departs from charging area 80 and resumes operation (automatic transport).

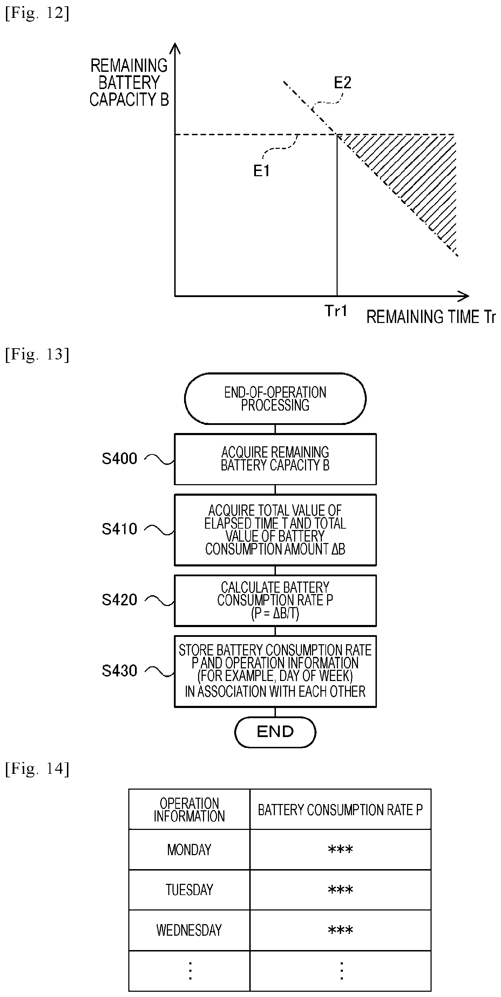

Here, Fig. 12 is a view illustrating an example of a relationship between first completion threshold E1 and second completion threshold E2. In Fig. 12, a horizontal axis represents remaining time Tr, and a vertical axis represents remaining battery capacity B. Remaining time Tr decreases toward the right side in the drawing. First completion threshold E1 is a constant value set to a predetermined remaining capacity, and the value is constant regardless of remaining time Tr. On the other hand, since second completion threshold E2 is set by multiplying battery consumption rate P by remaining time Tr, second completion threshold E2 is set to a smaller value as remaining time T decreases. Therefore, second completion threshold E2 is also referred to as a change threshold for charging completion determination. In the present embodiment, since remaining time Tr is relatively long at the beginning of operation, second completion threshold E2 becomes greater than first completion threshold E1, but, after predetermined remaining time Tr1, remaining time Tr becomes shorter, and second completion threshold E2 becomes smaller than first completion threshold E1. Therefore, after remaining time Tr1, if remaining battery capacity B of automated guided vehicle 10 being charged exceeds second completion threshold E2 even if remaining battery capacity B does not reach first completion threshold E1, it is determined that charging has completed (hatched region in the drawing). As a result, compared with a case where completion of charging is determined based only on first completion threshold E1, opportunities for determining completion of charging can be increased, thereby making it easier to resume operation of automated guided vehicle 10 and improving the operation rate.

The end-of-operation processing of S180 is performed based on a flowchart of Fig. 13. In the end-of-operation processing, processing section 61 acquires remaining battery capacities B of all automated guided vehicles 10 (S400), and acquires a total value of elapsed time T of the operation that has ended this time and a total value of battery consumption amount ΔB (S410). In S410, a total value of elapsed time T from the start of measurement in S120 until the processing of S410 is performed and elapsed time T stored in storage section 62 in S240 is acquired. In addition, total elapsed time T of multiple automated guided vehicles 10 is acquired. In addition, in S410, a total value of battery consumption amount ΔB obtained by subtracting remaining battery capacity B at the end of operation (current) from remaining battery capacity B0 at the start of operation acquired in S110 and battery consumption amount ΔB stored in S240 is acquired. Further, a sum of battery consumption amounts ΔB of multiple automated guided vehicles 10 is acquired.

Next, processing section 61 calculates battery consumption rate P as an average consumption amount of battery 37 per unit time during the operation time by dividing the total value of battery consumption amount ΔB by the total value of elapsed time T (S420). Subsequently, processing section 61 stores calculated battery consumption rate P in storage section 62 in association with the operation information of the operation that has ended this time (S430), and ends the end-of-operation processing.

In the present embodiment, as illustrated in Fig. 14, battery consumption rate P is registered in association with information on the day of the week of the operation date (the day of the week when the operation started) as the operation information. Therefore, in S310 of the charging completion determination processing described above, processing section 61 acquires battery consumption rate P corresponding to the day of the week of the current operation date. Here, in transport system 1 of the present embodiment, it is assumed that a load of transport work, such as types (weights) and amounts of cargo serving as a transport target, varies depending on the day of the week, and that battery consumption rate P exhibits a certain tendency. Therefore, by storing battery consumption rate P in association with the day-of-week information and using battery consumption rate P corresponding to the day of the week when setting second completion threshold E2, it is possible to set an appropriate completion threshold according to the load of the transport work. Therefore, it is possible to more appropriately determine completion of charging of battery 37.

Here, a correspondence relationship between the elements of the present embodiment and the elements of the present disclosure will be clarified. Processing section 61 of management device 60 that executes the charging completion determination processing in S160 of the charging management processing of the present embodiment corresponds to a charging completion determination section of the present disclosure. Storage section 62 of management device 60 corresponds to a storage section. Processing section 61 of management device 60 that executes the charging start determination processing in S140 of the charging management processing corresponds to a charging start determination section. In the present embodiment, an example of the charging management device of the present disclosure is also clarified by describing the operation of transport system 1 (management device 60).

In transport system 1 of the embodiment described above, processing section 61 sets second completion threshold E2 to be smaller as remaining time Tr until the end of the operation time becomes shorter, and determines the completion of charging of battery 37 based on remaining battery capacity B and second completion threshold E2. Therefore, even if remaining battery capacity B is the same, depending on remaining time Tr, it is possible to end charging and resume the operation of automated guided vehicle 10, so that it is possible to increase the time during which automated guided vehicle 10 transports the target object and to improve the operation rate.

In addition, since processing section 61 sets second completion threshold E2 by multiplying battery consumption rate P by remaining time Tr, it is possible to appropriately set second completion threshold E2 for determining remaining battery capacity B necessary for operation during remaining time Tr without excess or deficiency. Second completion threshold E2 need only be set based on a value obtained by multiplying battery consumption rate P by remaining time Tr, such as a value set by adding, as a margin, a minimum remaining capacity to be secured to a value obtained by multiplying battery consumption rate P by remaining time Tr. In this way, even if there is a slight variation in the load of the transport work, automated guided vehicle 10 for which completion of charging has been determined based on second completion threshold E2 can be more reliably operated until the end of the operation time.

In addition, processing section 61 stores battery consumption rate P calculated based on battery consumption amount ΔB during the prior operation time in storage section 62 in association with the operation information (in the present embodiment, the day of the week) relating to the prior operation. Then, processing section 61 acquires battery consumption rate P corresponding to the operation information relating to the current operation from storage section 62 and uses battery consumption rate P. Therefore, it is possible to set second completion threshold E2 reflecting the tendency of battery consumption rate P during the prior operation time and determine the completion of charging as appropriate.

In addition, processing section 61 uses first completion threshold E1, which is constant regardless of remaining time Tr, and second completion threshold E2, which changes according to remaining time Tr, to determine the completion of charging when remaining battery capacity B is greater than either first completion threshold E1 or second completion threshold E2. Therefore, it is possible to appropriately determine the completion of charging using two thresholds such as determining the completion of charging using first completion threshold E1, even when second completion threshold E2 is large due to long remaining time Tr.

The present disclosure is not limited in any way to the above-described embodiment, and it is needless to say that the present disclosure can be embodied in various aspects as long as the various aspects fall within the technical scope of the present disclosure.

For example, in the above-described embodiment, processing section 61 stores battery consumption rate P in association with the day of the week, and sets second completion threshold E2 using battery consumption rate P corresponding to the day of the week of the current operation, but the present disclosure is not limited to this. Battery consumption rate P is not limited to the day of the week, and may be associated with other operation information. For example, when the type of the cargo serving as the transport target differs depending on the operation date, battery consumption rate P may be associated with the type of the cargo as the operation information.

Alternatively, battery consumption rate P is not limited to being associated with the operation information. For example, processing section 61 may calculate a cumulative value of battery consumption amount ΔB and elapsed time T each time the end-of-operation processing is performed, update and store battery consumption rate P based on the cumulative values, and set second completion threshold E2 using battery consumption rate P regardless of the operation information. In addition, in transport system 1 including multiple automated guided vehicles 10, processing section 61 may associate battery consumption rate P with automated guided vehicle 10. That is, processing section 61 may calculate battery consumption rate P for each automated guided vehicle 10, store battery consumption rate P in storage section 62 in association with automated guided vehicle 10, and set second completion threshold E2 for each automated guided vehicle 10 using battery consumption rate P corresponding to automated guided vehicle 10 being charged. In addition, processing section 61 may associate battery consumption rate P with the operation information and automated guided vehicle 10.

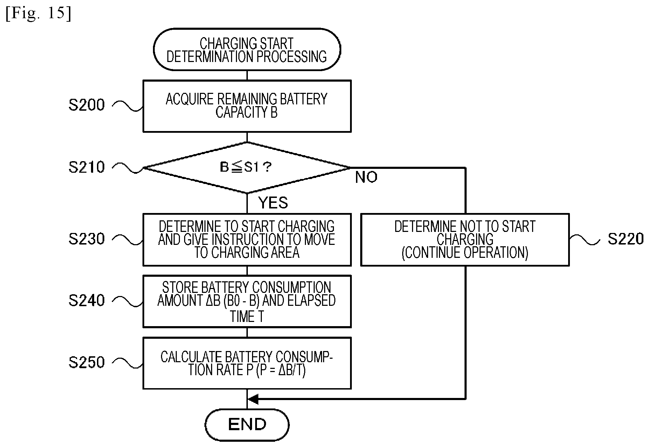

In the embodiment, battery consumption rate P is calculated in the end-of-operation processing, but the present disclosure is not limited to this, and, battery consumption rate P may be calculated in the charging start determination processing as illustrated in a modification of Fig. 15. In this modification, following the processing of S240, processing section 61 calculates battery consumption rate P by dividing battery consumption amount ΔB after the start of the operating time by elapsed time T after the start of the operating time (S250), and ends the charging start determination processing. As a result, processing section 61 can appropriately determine the completion of charging by setting second completion threshold E2 reflecting battery consumption rate P during the current operation. When processing section 61 has calculated battery consumption rate P in the earlier-executed charging start determination processing, processing section 61 may update (calculate) battery consumption rate P by including current battery consumption amount ΔB and elapsed time T.

In the modification of Fig. 15, processing section 61 calculates battery consumption rate P in the charging start determination processing, but the present disclosure is not limited to this, and, processing section 61 may calculate battery consumption rate P, before setting second completion threshold E2 in the charging completion determination processing, based on battery consumption amount ΔB and elapsed time T at that time point. As described above, when battery consumption rate P is calculated in processing other than the end-of-operation processing, the end-of-operation processing in S180 of the charging management processing may be omitted. Battery consumption rate P is not limited to being calculated by the end-of-operation processing or the processing in operation, and may be determined in advance based on the specifications of automated guided vehicle 10 or battery 37, or may be determined in advance based on experiments or the like.

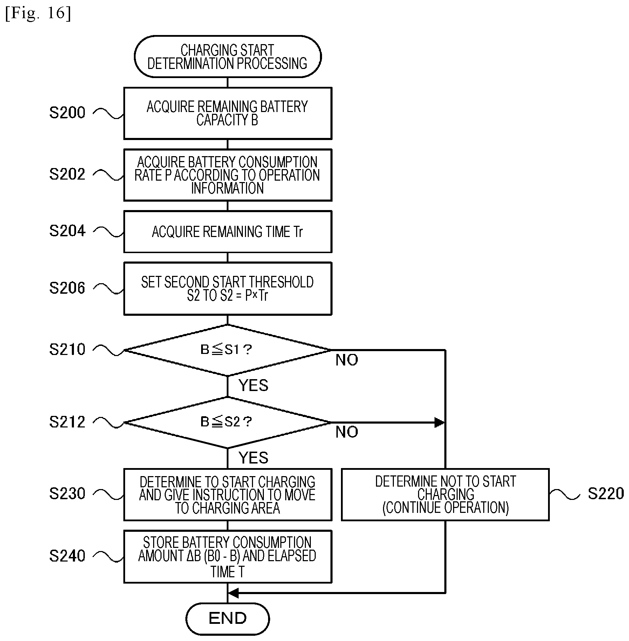

In the embodiment, processing section 61 sets the threshold value (second completion threshold E2) for charging completion determination based on battery consumption rate P and remaining time Tr, but may set the threshold value for charging start determination as illustrated in a modification of Fig. 16. In this modification, when processing section 61 acquires remaining battery capacity B of automated guided vehicle 10 in operation in S200, processing section 61 acquires battery consumption rate P according to the operation information (S202) and acquires remaining time Tr (S204). Next, processing section 61 sets second start threshold S2 for charging start determination by multiplying battery consumption rate P by remaining time Tr (S206).

Subsequently, processing section 61 determines whether remaining battery capacity B is equal to or less than first start threshold S1 (S210) and whether remaining battery capacity B is equal to or less than second start threshold S2 (S212). When it is determined that remaining battery capacity B is equal to or less than first start threshold S1 and equal to or less than second start threshold S2, processing section 61 proceeds to S230 and determines to start charging. On the other hand, when it is determined that remaining battery capacity B is equal to or less than first start threshold S1 but is not equal to or less than second start threshold S2, processing section 61 proceeds to S220 and determines not to start charging.

In this modification, processing section 61 sets second start threshold S2 to be smaller as remaining time Tr becomes shorter, and determines the start of charging of battery 37 based on remaining battery capacity B and second start threshold S2. Therefore, even if remaining battery capacity B is the same, depending on remaining time Tr, it is possible to continue the operation of automated guided vehicle 10 without determining the start of charging, so that it is possible to increase the time during which automated guided vehicle 10 transports the target object and to improve the operation rate.

In the modification, processing section 61 uses first start threshold S1, which is constant regardless of remaining time Tr, and second start threshold S2 (change threshold for charging start determination), which changes according to remaining time Tr, to determine the start of charging when remaining battery capacity B is equal to or less than first start threshold S1 and equal to or less than second start threshold S2. Therefore, even when second start threshold S2 is large due to long remaining time Tr, processing section 61 determines not to start charging unless remaining battery capacity B is equal to or less than first start threshold S1. In addition, when second start threshold S2 is small due to short remaining time Tr, processing section 61 can determine not to start charging unless remaining battery capacity B is equal to or less than second start threshold S2, even if remaining battery capacity B is equal to or less than first start threshold S1, thereby enabling automated guided vehicle 10 to continue operation. In this way, processing section 61 can appropriately determine the start of charging using two start thresholds.

In the modification of Fig. 16 as well, battery consumption rate P may be calculated as in the modification of Fig. 15. That is, processing section 61 may execute the processing of S240 and the processing of S250 in Fig. 15 instead of the processing of S202 in Fig. 16. As a result, processing section 61 can appropriately determine the start of charging by setting second start threshold S2 reflecting battery consumption rate P during the current operation.

In the embodiment, processing section 61 determines the completion of charging using first completion threshold E1 and second completion threshold E2, but the present disclosure is not limited to this, and, first completion threshold E1 need not be used. It should be noted that when second completion threshold E2 is set by multiplying battery consumption rate P by remaining time Tr, it is preferable to use first completion threshold E1 in order to appropriately determine the completion of charging. In addition, the present disclosure is not limited to comparing first completion threshold E1 and second completion threshold E2 with remaining battery capacity B, and the smaller one of first completion threshold E1 and second completion threshold E2 may be compared with remaining battery capacity B. Processing section 61 may obtain in advance remaining time Tr1 (see Fig. 12) at which second completion threshold E2 is equal to or less than first completion threshold E1, use first completion threshold E1 until remaining time Tr1 is reached, and use second completion threshold E2 after remaining time Tr1.

In the embodiment, processing section 61 sets second completion threshold E2 based on the value obtained by multiplying battery consumption rate P by remaining time Tr, but the present disclosure is not limited to this, and, processing section 61 needs only to set second completion threshold E2 to be smaller as remaining time Tr until the end of the operating time becomes shorter. For example, the relationship between remaining time Tr and second completion threshold E2 may be stored in storage section 62 in advance as a map, and, when remaining time Tr is given, corresponding second completion threshold E2 may be derived and set from the map. In the map, the relationship as illustrated in Fig. 12 may be determined in advance based on the specifications of automated guided vehicle 10 and battery 37, experiments, and the like. Alternatively, a relationship in which second completion threshold E2 decreases stepwise may be determined.

The present description also discloses a technical idea in which "the transport system according to Claim 1 or 2" in Claim 5 as originally filed is changed to "the transport system according to any one of Claims 1 to 4" and a technical idea in which "the transport system according to Claim 1 or 2" in Claim 6 as originally filed is changed to "the transport system according to any one of Claims 1 to 5".

### Industrial Applicability

The present disclosure is applicable to the manufacturing industry of the automated guided vehicle and the transport system.

### Reference Signs List

1: Transport system, 10: Automated guided vehicle (AMR), 11: Vehicle body portion, 21: Wheel, 22: Drive motor, 30: Coupling section, 31: Lifting and lowering plate, 32, 33, 34: Coupling pin, 35: Lifting and lowering device, 36: Contact detection sensor, 37: Battery, 38: Remaining battery capacity meter, 40: Control section, 41: Storage section, 42: Communication section, 51: Camera section, 52, 53: Sensor section, 54: Light emitting section, 60: Management device, 61: Processing section, 62: Storage section, 63: Communication section, 64: Timing section, 80: Charging area, 100: Roll cage cart, 101: Loading platform portion, 110: Caster, C: Roll cage cart storage area, M: Marker, R: Shelf

## Claims

1. A transport system comprising:
an automated guided vehicle configured to transport a target object using power of a battery; and
a charging completion determination section configured to, when an operation of the automated guided vehicle is stopped and the battery is being charged during a predetermined operation time, set a completion threshold to be smaller as a remaining time until an end of the operation time becomes shorter, and determine completion of charging of the battery based on a remaining capacity of the battery and the completion threshold.

2. The transport system according to Claim 1,
wherein the charging completion determination section sets the completion threshold based on a value obtained by multiplying a consumption rate of the battery by the remaining time.

3. The transport system according to Claim 2, further comprising:
a storage section configured to store the consumption rate calculated based on a consumption amount of the battery during a prior predetermined operation time in association with operation information relating to a prior operation,
wherein the charging completion determination section acquires the consumption rate corresponding to operation information relating to a current operation from the storage section and uses the consumption rate.

4. The transport system according to Claim 2,
wherein the charging completion determination section uses the consumption rate calculated by dividing a consumption amount of the battery after a start of the operation time by a time after the start of the operation time.

5. The transport system according to Claim 1 or 2,
wherein the charging completion determination section uses a first completion threshold which is constant regardless of the remaining time, and a second completion threshold as the completion threshold to determine completion of charging when the remaining capacity of the battery is greater than either the first completion threshold or the second completion threshold.

6. The transport system according to Claim 1 or 2, further comprising:
a charging start determination section configured to set a start threshold to be smaller as the remaining time becomes shorter and determine a start of charging of the battery based on the remaining capacity of the battery and the start threshold.

7. A charging management device for an automated guided vehicle configured to transport a target object using power of a battery, the charging management device comprising:
a charging completion determination section configured to, when an operation of the automated guided vehicle is stopped and the battery is being charged during a predetermined operation time, set a completion threshold to be smaller as a remaining time until an end of the operation time becomes shorter, and determine completion of charging of the battery based on a remaining capacity of the battery and the completion threshold.
